# EUROPÄISCHE PATENTANMELDUNG

(11) **EP 4 079 936 A1**
(43) Veröffentlichungstag der Anmeldung: **26.10.2022**
(21) Anmeldenummer: 21170036.4
(22) Anmeldetag: 23.04.2021
(51) Int. Cl.: C23G 1/36, B01D 21/00, B01D 21/01, B01D 21/02, C23G 1/08

(54) **INLINE-SILIZIUMABSCHEIDUNG AN EINER BEIZANLAGE**

(71) Anmelder: Primetals Technologies Austria GmbH, 4031 Linz (AT)
(72) Erfinder: Kofler, Klaus, 4020 Linz (AT); Stadlbauer, Alois, 4209 Engerwitzdorf (AT); Frithum, Gerhard, 2514 Traiskirchen (AT)
(74) Vertreter: Metals@Linz

(57) **Zusammenfassung**

Die Erfindung betrifft eine Vorrichtung und ein Verfahren zum Abscheiden ungelöster Stoffe, insbesondere von Siliziumverbindungen, aus einer Beizflüssigkeit an einer Beizanlage. Ein Beizkreislauf der Beizanlage weist einen Beiztank zum Beizen von Metallbändern, eine Rücklaufleitung zwischen dem Beiztank und einem Kreislauftank, eine Umwälzpumpe zum Umwälzen eines Hauptvolumenstroms an Beizflüssigkeit aus dem Beiztank und eine in einer Druckleitung zwischen dem Kreislauftank und dem Beiztank angeordnete Heizvorrichtung auf. Die erfindungsgemäße Vorrichtung umfasst eine Flokkulationsvorrichtung, mit der zumindest ein Flockungshilfsmittel in den Hauptvolumenstrom eingebracht werden kann, sowie eine in dem Kreislauftank angeordnete, bevorzugt als Schrägklärvorrichtung ausgestaltete Abscheidevorrichtung zum Sedimentieren ungelöster Stoffe direkt aus dem Hauptvolumenstrom. Beim Beizen von beispielsweise siliziumhaltigen Stahlbändern (Elektrobändern) kann mittels zweier oder mehrerer Mischzonenbehälter eine zumindest zweistufige Flokkulation realisiert werden.

## Beschreibung

Die Erfindung betrifft eine Vorrichtung und ein Verfahren zum Abscheiden ungelöster Stoffe, insbesondere von Siliziumbestandteilen, in einem Beizkreislauf an einer Beizanlage.

In einer Beizanlage wird von der Oberfläche eines gewalzten Metallbandes, beispielsweise eines Stahlbandes, Zunder, welcher in einem Warmwalzprozess entsteht, entfernt, um eine weitere Verarbeitung des Metallbandes zu ermöglichen. Hierfür wird die Zunderschicht mittels einer geeigneten Beizflüssigkeit, beispielsweise einer salzsäurehaltigen (HCl) oder schwefelsäurehaltigen (H₂SO₄) Beizlösung, abgetragen. Üblicherweise wird das verzunderte Metallband durch mehrere Beizbehälter hintereinander geführt. Die Zunderschicht (im Falle eines Stahlbandes hauptsächlich aus Eisenoxiden bestehend) geht in der Beizflüssigkeit in Lösung bzw. es fallen unlösliche Bestandteile als sogenannter Beizschlamm aus. Der Beizschlamm enthält entsprechend der Zusammensetzung des ursprünglichen Metallbandes auch chemische Verbindungen von Begleitelementen (z.B. Kohlenstoff) sowie weiteren Legierungselementen. Nach dem Beizen wird das entzunderte Metallband in der Regel durch Spülen mit einer Spülflüssigkeit von noch anhaftenden Resten der Beizflüssigkeit gereinigt und danach getrocknet.

Die verbrauchte Beizlösung (in Folge Abbeize genannt) wird in einer separaten Regenerationsanlage aufbereitet. Die dabei gewonnenen Eisenoxide stellen hochwertige chemische Grundstoffe für die chemische Industrie dar, weswegen man bestrebt ist, derartige Oxide mit möglichst hohem Reinheitsgrad abzuscheiden.

Werden beispielsweise in salzsäurebasierten Beizanlagen Stahlbänder mit erhöhtem Siliziumanteil (d.h. mit einem Siliziumanteil von mehr als zwei Gewichtsprozent) gebeizt, so bildet sich ein nichtlösliches Kolloid in Form eines gelartigen Silikatschlamms (Kieselsäure) in der Beizlösung, der nur mit großem Aufwand abgetrennt werden kann. Zu den Stahlbändern mit erhöhtem Siliziumanteil zählen insbesondere sogenannte Elektrobänder. Der Silikatschlamm lagert sich in Rohren und anderen Gewerken der Beizanlage ab und führt zu deren stetigem Zusetzen bzw. Verstopfen (sogenanntes Fouling), was im schlimmsten Fall den Ausfall ganzer Anlagenkomponenten nach sich zieht. Dies trifft auch auf andere Legierungsbestandteile der Stahlbänder, wie z.B. Al, C etc., zu und betrifft auch die Regenerationsanlage.

Um die Leistung der Beizanlage aufrechtzuerhalten, müssen diese Ablagerungen in regelmäßigen Zeitabständen entfernt werden, was mit einem entsprechenden Wartungsaufwand verbunden ist. Gängige Methoden zur Entfernung von unlöslichen Rückständen stellen einerseits das Rückspülen der betreffenden Gewerke mit einer Lauge (z.B. Natronlauge - NaOH) sowie andererseits das mechanische Entfernen dieser Rückstände auf manuellem Wege dar. Beide Verfahren bedeuten eine Verringerung der Verfügbarkeit der Beizanlage. Zudem sind für eine Rückspülung mit einer Lauge als prozessfremdem Stoff spezielle und teure Einrichtungen erforderlich bzw. ist ein zugehöriges Konzept zur Aufbereitung bzw. Entsorgung dieser Spüllösung nötig.

Eine weitere Methode der Beseitigung von Ablagerungen besteht in der Abtrennung durch Mikrofiltration. Aufgrund der Prozessbedingungen (hoher pH-Wert bzw. hohe Temperatur der Beizflüssigkeit) sind die Standzeiten der dafür verwendeten Membranen gering, sodass derartige Verfahren unwirtschaftlich sind. Zudem ist diese Art der Filtration nur bedingt für große Volumenströme geeignet, da die eingesetzten Mikrofilter eine sehr kleinen Porenstruktur aufweisen. So ist beispielsweise aus der AT 411 575 B ein Verfahren zur Verringerung des Gehalts an unerwünschten Begleitelementen - insbesondere Siliziumverbindungen (Kieselsäure) - bekannt, wobei die anfallende Beizflüssigkeit in einem Absetzbehälter beruhigt und anschließend mit Hilfe eines Querstrom-Mikrofilters in einem Temperaturbereich von 10-55°C gereinigt wird. Zwar ist in der beschriebenen Weise eine effektive Abscheidung von unerwünschten Kolloiden aus Beizflüssigkeiten möglich, jedoch würde die Erfindung der AT 411 575 B neben dem Einsatz der genannten Mikrofilter an einer gängigen Beizanlage für Stahlbänder auch ein Herunterkühlen der zu reinigenden Beizflüssigkeit erfordern, da insbesonders Elektrobänder in einem höheren Temperaturbereich von bis zu 90°C gebeizt werden.

Aus dem Stand der Technik sind weiterhin Beizanlagen mit mehreren Beiztanks bekannt, die von einem zu beizenden Metallband nacheinander durchlaufen werden und in denen jedem Beiztank ein eigener Beizkreislauf zugeordnet ist, in dem die Beizflüssigkeit aufgeheizt und umgewälzt wird. Im ersten von dem Band durchlaufenen Beiztank ist die Konzentration an gelösten und ungelösten Zunderverbindungen am größten und nimmt relativ dazu in den nachfolgenden Beiztanks ab. Der gesamte umgewälzte Volumenstrom eines Beizkreislaufs beträgt beispielsweise 300 bis 500 Kubikmeter pro Stunde und wird im Folgenden als Hauptvolumenstrom des Beizkreislaufs bezeichnet. Ein Beizkreislauf umfasst zumindest den betreffenden Beiztank, einen Kreislauftank, eine Umwälzpumpe sowie eine Heizvorrichtung, wobei die zwischen Beiztank und Kreislauftank verlaufende Rohrleitung als Rücklaufleitung des betreffenden Beiztanks bezeichnet wird. Der Kreislauftank weist ein größeres Volumen als der zugeordnete Beiztank auf (in der Regel etwa das doppelte Volumen des Beiztanks) und dient während des Beizbetriebes als sogenannter Vorlagebehälter, welcher nur zum Teil, beispielsweise zu etwa 30-50%, mit Beizflüssigkeit gefüllt ist, und dessen Volumen im Folgenden auch als Vorlagevolumen des Kreislauftanks bezeichnet wird. Dieses Vorlagevolumen dient als Puffer, beispielsweise um Schwankungen der Füllstandshöhe im zugeordneten Beiztank ausgleichen zu können. Zudem dient der Kreislauftank der Aufnahme der Beizflüssigkeit aus dem zugeordneten Beiztank bei einer allfälligen Notentleerung, d.h. wenn beispielsweise im Falle einer Betriebsunterbrechung die Beizflüssigkeit rasch aus dem Beiztank abgelassen werden muss.

Weiterhin wird bei der Reinigung von Beizflüssigkeit in einem Beizkreislauf zwischen einem sogenannten Inline-Betrieb und einem sogenannten Offline-Betrieb unterschieden. Beim Inline-Betrieb wird zumindest ein Teilstrom aus dem Hauptvolumenstrom eines Beizkreislaufs entnommen und einer Vorrichtung zur Abtrennung ungelöster Stoffe zugeführt. Nach der Abtrennung wird die gereinigte Beizflüssigkeit wieder in den Beizkreislauf zurückgeführt. Im Offlinebetrieb dagegen wird ein Teil der Beizflüssigkeit zunächst einer Vorrichtung zur Abtrennung ungelöster Stoffe zugeführt und die von den ungelösten Stoffen gereinigte Beizflüssigkeit anschließend auch noch einer Regenerationsanlage zur Abtrennung gelöster Bestandteile (z.B. Eisenchloridverbindungen) zugeführt. Dementsprechend werden bei einem Inline-Betrieb Ablagerungen ungelöster Stoffe in den Anlagenkomponenten der Beizanlage selber zumindest teilweise (entsprechend dem Verhältnis des Teilstroms zum Hauptvolumenstrom) verhindert, wohingegen im Offline-Betrieb Ablagerungen in der Regenerationsanlage vollständig verhindert werden und die Qualität des aus der Regenerationsanlage gewonnenen Wertstoffs verbessert wird. Inline- und Offline-Betrieb können prinzipiell miteinander kombiniert werden.

Die Prozessbedingungen in einem Beiztank werden im Wesentlichen durch den Hauptvolumenstrom der umgewälzten Beizflüssigkeit und deren Prozesstemperatur Tₚ bestimmt. Durch das Umwälzen der Beizflüssigkeit wird neben der Abscheidung gelöster Zunderbestandteile eine für den Beizprozess notwendige Strömung der Beizflüssigkeit im jeweiligen Beiztank erzeugt. Zudem werden durch die Heizvorrichtung des Beizkreislaufs Wärmeverluste der Beizflüssigkeit im jeweiligen Beiztank ausgeglichen.

Speziell für das Beizen von obengenannten Stahlbändern mit einem größeren Anteil an Silizium sind aus dem Stand der Technik weiterhin Beizanlagen bekannt, die zur Abscheidung der beim Beizen anfallenden ungelösten Stoffe (z.B. Siliziumdioxid) aus der Beizflüssigkeit entsprechende Abscheidevorrichtungen aufweisen. Diese Inline-Abscheidevorrichtungen trennen unlösliche Bestandteile aus der Beizflüssigkeit zwar im Inline-Betrieb ab, scheiden diese jedoch nur aus einem Teilstrom des Gesamtumwälzstroms in einem Beizkreislauf ab und benötigen zudem eine Vorrichtung zur Kühlung des Teilstromes. Nach der Reinigung des Teilstromes und vor der Rückführung in den Beizkreislauf muss daher die dem Teilstrom entnommene Wärmemenge (zusätzlich zur allgemeinen Verlustwärme während des Beizprozesses) wieder zugeführt werden, was einen erhöhten Energieeinsatz zur Folge hat.

Weiterhin ist aus der DE 42 42 619 C2 bekannt, zu klärende Beizflüssigkeit, insbesondere Beizflüssigkeit aus einer Salzsäure-Beizanlage für Elektrobänder mit hohem Siliziumanteil, kontinuierlich aus einem Säure-Vorlagebehälter der Beizanlage zunächst einem Vorklärbehälter zuzuführen und dort mittels Sedimentation einen Großteil der Schwebstoffe abzusetzen. Ein Teil der teilgeklärten Beizflüssigkeit aus dem Überlaufbereich des Vorklärbehälters wird anschließend einer Säure-Regenerationsanlage zugeführt, während ein Säure-Schlamm-Gemisch aus dem Bodenbereich des Vorklärbehälters in zeitlichen Intervallen abgezogen und einer Reinigungsbehandlung mit Hilfe von Flockungsmitteln unterzogen wird. Da die offenbarten Volumenströme (in der Größenordnung von wenigen Kubikmetern pro Stunde) viel geringer als die Volumenströme eines üblichen Beizkreislaufs sind, eignet sich die offenbarte Erfindung nicht für eine Klärung des Hauptvolumenstromes im Beizkreislauf einer Beizanlage. Zudem resultiert aus dem für die Erfindung benötigten Zusatzbehälter samt Leitungen ein erheblicher Platzbedarf.

Nachteilig an derartigen aus dem Stand der Technik bekannten Verfahren und Vorrichtungen zur Abscheidung von Siliziumverbindungen aus einer Beizflüssigkeit im Inline-Betrieb ist einerseits der Umstand, dass nur ein Teil des Hauptvolumenstromes von ungelösten Stoffen gereinigt wird. Im Fall des Beizens von Stahlbändern mit erhöhtem Siliziumgehalt ist daher aufgrund des damit einhergehenden erhöhten Reinigungsaufwandes die Verfügbarkeit einer derartigen Beizanlage im Vergleich zu einem Betrieb, in dem ausschließlich Bänder ohne erhöhten Siliziumgehalt gebeizt werden, immer noch deutlich verringert.

Es ist daher Aufgabe der vorliegenden Erfindung, die Nachteile der vorgenannten Systeme zu überwinden und die Verfügbarkeit einer Beizanlage mit nur geringem zusätzlichem Platzbedarf deutlich zu verbessern.

Die Aufgabe wird erfindungsgemäß durch eine Vorrichtung mit den Merkmalen des Anspruchs 1 und einem Verfahren mit den Merkmalen des Anspruchs 8 gelöst.

Vorteilhafte Ausgestaltungen der Erfindung sind Gegenstand der Unteransprüche.

Eine erfindungsgemäße Vorrichtung zum Abscheiden ungelöster Stoffe, insbesondere von Siliziumverbindungen, aus einer Beizflüssigkeit an einer Beizanlage mit zumindest einem Beizkreislauf weist eine Flokkulationsvorrichtung und eine Abscheidevorrichtung auf. Der Beizkreislauf umfasst einen Beiztank der Beizanlage zum Beizen von Metallbändern, eine Rücklaufleitung zwischen dem Beiztank und einem Kreislauftank und eine Druckleitung zwischen dem Kreislauftank und dem Beiztank. Weiterhin umfasst der Beizkreislauf eine Umwälzpumpe zum Umwälzen eines Hauptvolumenstroms an Beizflüssigkeit aus dem Beiztank durch die Rücklaufleitung in den Kreislauftank und über die Druckleitung zurück in den Beiztank sowie eine in der Druckleitung angeordnete Heizvorrichtung zum Erwärmen des durch die Druckleitung durchgeleiteten Hauptvolumenstroms auf eine im Beiztank vorherrschende Prozesstemperatur Tₚ, die in einem Bereich von bis zu 90°C liegt.

Die Flokkulationsvorrichtung ist bevorzugt in der Rücklaufleitung angeordnet und umfasst einen oder mehrere Mischzonenbehälter zum Einbringen zumindest eines Flockungshilfsmittels in den Hauptvolumenstrom. Alternativ kann die Flokkulationsvorrichtung auch im Beiztank oder in der Druckleitung angeordnet sein. Das zumindest eine eingebrachte Flockungshilfsmittel ist dabei an die Prozesstemperatur Tₚ der Beizflüssigkeit angepasst. Die Abscheidevorrichtung ist im Kreislauftank des Beizkreislaufs angeordnet und dazu ausgebildet, ungelöste Stoffe direkt aus dem durch den Kreislauftank geleiteten Hauptvolumenstrom abzuscheiden.

Durch die erfindungsgemäße Vorrichtung kann ein Inline-Betrieb realisiert werden, bei dem sich der Abscheideprozess für ungelöste Stoffe auf den gesamten Hauptvolumenstrom erstreckt, sodass in der Folge die Beizflüssigkeit für den Beizprozess in gleichbleibender Qualität zur Verfügung gestellt wird. Zudem kann im Vergleich zu aus dem Stand der Technik bekannten Verfahren Energie eingespart werden, da ein separates Abkühlen und Wiedererwärmen der zu reinigenden Beizflüssigkeit entfällt und aufgrund der in den Kreislauftank integrierten Abscheidevorrichtung ein nur geringer Wärmeverlust der Beizflüssigkeit beim Abscheiden der ungelösten Stoffe entsteht.

Bevorzugt weist der Kreislauftank ein mehrfaches, beispielsweise ein 2- bis 3-faches Volumen des Beiztanks aus dem betreffenden Beizkreislauf auf, wobei die Abscheidevorrichtung mindestens eine Beruhigungszone, eine Sedimentationszone und eine Vorlagezone umfasst. Dabei ist zwischen der Beruhigungszone und der Sedimentationszone ein erster Überlauf und zwischen der Sedimentationszone und der Vorlagezone ein zweiter Überlauf angeordnet.

Durch ein genanntes 2- bis 3-faches Volumen des Kreislauftanks im Verhältnis zum Volumen des Beiztanks in dem betreffenden Beizkreislauf wird ermöglicht, dass die Abscheidevorrichtung direkt in den Kreislauftank integriert wird, wodurch die Notwendigkeit zusätzlicher Rohrleitungen im Vergleich zu einer außerhalb einer herkömmlichen Kreislauftanks angeordneten Abscheidevorrichtung entfällt.

Beispielsweise weist ein Beiztank ein Volumen von 30 bis 40 Kubikmetern und ein Kreislauftank gemäß Erfindung ein Volumen von 75 bis 100 Kubikmeter auf. Dabei kann die Sedimentationszone ausreichend groß dimensioniert werden, sodass der gesamte durch den Kreislauftank durchtretende Hauptvolumenstrom an Beizflüssigkeit während eines normalen Beizbetriebes der Beizanlage zu mehr als 90% von ungelösten Stoffen gereinigt wird, sodass die Zeitdauer zwischen notwendigen Wartungsintervallen an der Beizanlage deutlich erhöht werden kann.

In der Beruhigungszone können die beim Einströmen der Beizflüssigkeit in den Kreislauftank entstehenden Verwirbelungen auslaufen, sodass der Übertritt der Beizflüssigkeit in die anschließende Sedimentationszone in Form einer beruhigten Strömung erfolgt, was zusätzlich durch den ersten Überlauf begünstigt wird. Der zweite Überlauf zwischen der Sedimentationszone und der Vorlagezone verhindert den Übertritt von Beizschlamm aus der Sedimentationszone in die nachfolgend angeordnete Vorlagezone.

Gemäß einer weiteren bevorzugten Ausgestaltung der erfindungsgemäßen Vorrichtung weist die Flokkulationsvorrichtung zumindest zwei Mischzonenbehälter für die Zugabe von zumindest zwei unterschiedlichen Flockungshilfsmitteln in den Hauptvolumenstrom des Beizkreislaufs auf. Dadurch kann die Art und Konzentration der in den Hauptvolumenstrom eingebrachten Flockungshilfsmittel jeweils an die chemische Zusammensetzung der aktuell in der Beizanlage gebeizten Metallbänder angepasst werden. Hierfür kann die Zusammensetzung und Konzentration der Zunderbestandteile in der Beizflüssigkeit beispielsweise mit Hilfe eines Beizmodells erfolgen, das die chemische Zusammensetzung der Metallbänder und der Beizflüssigkeit berücksichtigt.

Beispielsweise kann mit Hilfe von mehreren Mischzonenbehältern beim Beizen von überwiegend kohlenstoffhältigen Metallbändern eine Zugabe von lediglich einem ersten Flockungshilfsmittel in einem ersten Mischzonenbehälter erfolgen, während eine Zugabe in den anderen Mischzonenbehältern unterbleibt. In einem anderen Fall - beispielsweise wenn an der betreffenden Beizanlage siliziumhaltige Stahlbänder gebeizt werden, kann die Zugabe des ersten Flockungshilfsmittels in dem ersten Mischzonenbehälter unterbleiben, während mittels eines oder mehrerer der anderen Mischzonenbehälter eine ein- oder mehrstufige Flokkulation erfolgt.

In einer bevorzugten Ausgestaltung der erfindungsgemäßen Vorrichtung ist die Summe der Volumina aller Mischzonenbehälter derart bemessen, dass die Verweilzeit der durch die Mischzonenbehälter durchgeleiteten Beizflüssigkeit darin 1 bis 3 Minuten beträgt. Dadurch wird ermöglicht, dass die ungelösten Stoffe in der Beizflüssigkeit miteinander zu größeren bzw. schwereren Partikeln koagulieren, die sich in der Sedimentationszone schneller absetzen.

Bevorzugt ist die Abscheidevorrichtung als Schrägklärvorrichtung ausgestaltet. Schrägklärvorrichtungen umfassen eine Mehrzahl von zueinander parallelen Strömungskanälen, durch die die Beizflüssigkeit durchgeleitet wird, wobei ungelöste Stoffe aus der Beizflüssigkeit aufgrund der Schwerkraftwirkung in einem Sedimentationsvorgang abgeschieden werden. Aus diesem Grund weisen Schrägklärvorrichtungen weisen keine bewegten Teile auf und verfügen in der Folge über lange Einsatzzeiten bei vergleichsweise geringem Wartungsaufwand.

Bevorzugt sind die Strömungskanäle in einem Winkel α gegen die Vertikale geneigt und bestehen aus einem säurebeständigen und hitzefesten Material, das dauerhaft Temperaturen von zumindest 90°C widersteht. Der Winkel α liegt bevorzugt in einem Bereich von 15-60°, besonders bevorzugt in einem Bereich von 25-35°. Bevorzugt beträgt ein Normalabstand d zwischen benachbarten Strömungskanälen (gemeint ist der Abstand zwischen den Schwerpunkten der Querschnittsflächen in einer Schnittebene normal zur Längsrichtung der benachbarten Strömungskanäle) mindestens 50mm, bevorzugt mindestens 75mm. In einer besonders bevorzugten Ausgestaltung ist die Schrägklärvorrichtung zur Erhöhung der mechanischen Stabilität als eine Wabenform ausbildende Anordnung von parallel verlaufenden Strömungskanälen ausgestaltet.

Schrägklärvorrichtungen sind aus dem Stand der Technik bekannt, bestehen beispielsweise aus einem thermoplastischen Kunststoff und können einerseits kostengünstig - z.B. mit Hilfe eines 3D-Druckverfahrens - gefertigt und an beliebige geometrische Erfordernisse angepasst werden; andererseits ist eine Schrägklärvorrichtung mit den genannten Bemaßungen bei einem Bruchteil der Kosten mechanisch deutlich robuster und gleichzeitig weniger anfällig für Verstopfungen durch ungelöste Stoffe aus der Beizflüssigkeit als beispielsweise im Stand der Technik verwendete Mikrofilter.

Die Vorteile und technischen Wirkungen des erfindungsgemäßen Verfahrens korrespondieren mit jenen der erfindungsgemäßen Vorrichtung. Bei dem erfindungsgemäßen Verfahren zum Abscheiden ungelöster Stoffe, insbesondere von Siliziumverbindungen, aus einer Beizflüssigkeit in zumindest einem Beizkreislauf einer Beizanlage, der Beizkreislauf umfassend
- einen Beiztank der Beizanlage zum Beizen von Metallbändern,
- eine Rücklaufleitung zwischen dem Beiztank und einem Kreislauftank,
- eine Druckleitung zwischen dem Kreislauftank und dem Beiztank,
- eine Umwälzpumpe und
- eine in einer Druckleitung Heizvorrichtung,
wird
- mittels der Umwälzpumpe ein Hauptvolumenstrom an Beizflüssigkeit aus dem Beiztank durch die Rücklaufleitung in den Kreislauftank und über die Druckleitung zurück in den Beiztank umgewälzt,
- mittels einer Flokkulationsvorrichtung mit einem oder mehreren Mischzonenbehältern zumindest ein Flockungshilfsmittel in den Hauptvolumenstrom eingebracht,
- mittels einer in dem Kreislauftank angeordneten Abscheidevorrichtung ungelöste Stoffe direkt aus dem Hauptvolumenstrom abgeschieden werden, und
- mittels der Heizvorrichtung der Hauptvolumenstrom auf eine Prozesstemperatur Tₚ erwärmt.

Das erfindungsgemäße Verfahren zum Abscheiden ungelöster Stoffe aus einer Beizflüssigkeit wird bevorzugt während des Beizens von Metallbändern an der betreffenden Beizanlage durchgeführt. Alternativ dazu kann das erfindungsgemäße Verfahren jedoch auch zu einem Zeitpunkt eingesetzt werden, wenn an der Beizanlage keine Metallbänder gebeizt werden, beispielsweise um die Beizflüssigkeit nach dem Beizen einer Anzahl von Metallbändern mit erhöhtem Siliziumgehalt besonders gründlich von entsprechenden ungelösten Beizrückständen zu reinigen. Auch in diesem Fall wird der Hauptvolumenstrom eines Beizkreislaufs mit Hilfe der Umwälzpumpe umgewälzt.

Bei einer Ausgestaltung des erfindungsgemäßen Verfahrens wird
- beim Beizen einer ersten Sorte von Metallbändern mittels eines ersten Mischzonenbehälters ein erstes Flockungshilfsmittel in den Hauptvolumenstrom eingebracht und,
- beim Beizen einer zweiten Sorte von Metallbändern ausschließlich mittels eines zweiten und/oder eines dritten Mischzonenbehälters zumindest ein zweites Flockungshilfsmittel in den Hauptvolumenstrom eingebracht.

Anders ausgedrückt: beim Beizen einer ersten Sorte von Metallbändern wird mittels eines ersten Mischzonenbehälters ein erstes Flockungshilfsmittel in den Hauptvolumenstrom eingebracht, während die Zugabe von weiteren Flockungshilfsmitteln in einem zweiten und dritten Mischzonenbehälter unterbleibt, sodass diese von dem Hauptvolumenstrom nur passiv durchströmt werden. Beim Beizen einer zweiten - d.h. zur ersten Sorte unterschiedlichen - Sorte von Metallbändern unterbleibt die Zugabe eines Flockungshilfsmittels im ersten Mischzonenbehälter, während entweder ausschließlich in einem zweiten Mischzonenbehälter ein zweites Flockungshilfsmittel zugegeben wird oder sowohl in einem zweiten als auch in einem dritten Mischzonenbehälter ein zweites und ein drittes Flockungshilfsmittel in den Hauptvolumenstrom zugegeben werden.

Zur ersten Sorte von Metallbändern können beispielsweise Stahlbänder mit einem bestimmten Gehalt an Kohlenstoff fallen, während zur zweiten Sorte Stahlbänder mit hohem Siliziumgehalt (oder/oder anderer unlöslicher Legierungselementen des Stahlbandes) zählen können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Gleiche Details sind dabei in allen Figuren jeweils mit denselben Bezeichnern gekennzeichnet. Es zeigen:
FIG 1 eine schematische Darstellung eines aus dem Stand der Technik bekannten einfachen Beizkreislaufs einer Beizanlage,
FIG 2 eine schematische Darstellung einer aus dem Stand der Technik bekannten Siliziumabscheidung in einem Teilstrom des Beizkreislaufs einer Beizanlage,
FIG 3 eine beispielhafte Darstellung eines Beizkreislaufs mit einer erfindungsgemäßen Vorrichtung, umfassend eine Abscheidevorrichtung im Kreislauftank.

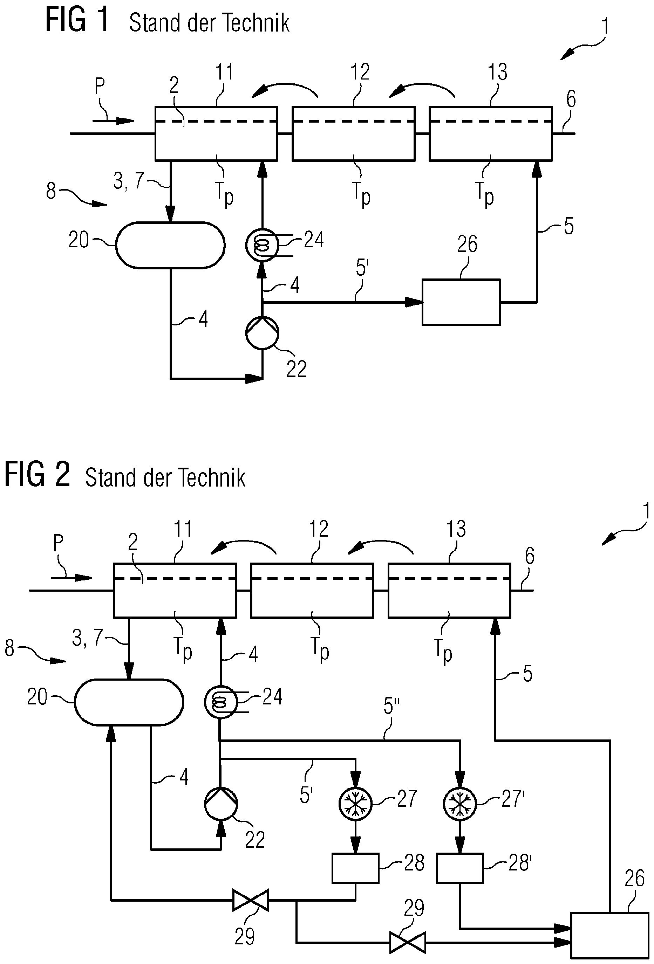

Figur 1 (FIG 1) zeigt schematisch eine Beizanlage 1, umfassend drei Beiztanks 11, 12 und 13, die jeweils mit Beizflüssigkeit 2 gefüllt sind und von einem zu beizenden Metallband 6 in Produktionsrichtung P (in FIG 1 durch einen Pfeil von links nach rechts symbolisiert) nacheinander durchlaufen werden. Jedem Beiztank 11, 12, 13 ist ein eigener Beizkreislauf 8 zugeordnet, wobei in FIG 1 lediglich der Beizkreislauf 8 des ersten Beiztanks 11 dargestellt ist. Ein Verbindungspfeil zwischen zwei Gewerken symbolisiert im Folgenden jeweils eine verbindende Rohrleitung. Neben dem Beiztank 11 selbst umfasst der dargestellte Beizkreislauf 8 einen Kreislauftank 20, eine Umwälzpumpe 22 sowie eine Heizvorrichtung 24, wobei diese Gewerke über Rohrleitungen seriell miteinander verbunden sind. Eine zwischen Beiztank 11 und Kreislauftank 20 verlaufende Leitung wird dabei als Rücklaufleitung 3 und eine zwischen Kreislauftank 20 und Beiztank 11 verlaufende Leitung als Druckleitung 4 bezeichnet.

Die in der Beizanlage 1 eingesetzte Beizflüssigkeit 2 wird entgegen der Produktionsrichtung P des Metallbandes 6 durch die einzelnen Beiztanks 11, 12 und 13 geführt, wobei frische Beizflüssigkeit 2 in den letzten Beiztank 13 eingebracht wird und kaskadenartig (in FIG 1 durch gekrümmte Pfeile zwischen den einzelnen Beiztanks 11, 12 und 13 symbolisiert) entgegen der Produktionsrichtung P zum ersten Beiztank 11 geführt wird. Dabei nimmt die Konzentration an gelösten Stoffen (z.B. Eisen Fe²⁺) und ungelösten Stoffen (z.B. Siliziumdioxid) in der Beizflüssigkeit 2 zu. Aus dem ersten Beiztank 11 wird Beizflüssigkeit 2 zunächst über die Rücklaufleitung 3 in Form des sogenannten Hauptvolumenstroms 7 in den Kreislauftank 20 ausgetragen, woraufhin mittels der Umwälzpumpe 22 ein Großteil davon über die Heizvorrichtung 24 und die Druckleitung 4 wieder dem Beiztank 11 zugeführt wird. Ein Teilstrom 5' wird aus der Druckleitung 4 abgezweigt und einer Aufbereitung in einer Regenerationsanlage 26 zugeführt. Ein dem entnommenen Teilstrom 5' entsprechender gereinigter und auf eine in den Beiztanks 11, 12 bzw. 13 herrschende übliche Prozesstemperatur Tₚ von bis zu 90°C aufgeheizter Teilstrom 5 an wiederaufbereiteter Beizflüssigkeit 2 wird dem letzten Beiztank 13 wieder zugeführt.

Das Volumen der Beiztanks 11, 12 bzw. 13 beträgt beispielsweise jeweils 30 bis 40 Kubikmeter bei einem jeweiligen Hauptvolumenstrom 7 von beispielsweise bis zu 500 Kubikmeter pro Stunde, wobei die Rohrleitungen des jeweiligen Beizkreislaufs insgesamt ein zusätzliches Volumen von etwa 10 Kubikmetern aufweisen. Der zur Regenerationsanlage 26 abgezweigte Teilstrom 5' beträgt beispielsweise etwa 15 Kubikmeter pro Stunde. Im normalen Beizbetrieb ist der Kreislauftank 20 etwa zu einem Drittel mit Beizflüssigkeit gefüllt. Um daher die bei einer Notentleerung aus einem Beiztank und den zugehörigen Rohrleitungen abgelassene Beizflüssigkeit fassen zu können, weist der zugehörige Kreislauftank ein Volumen von beispielsweise etwa 70 Kubikmeter auf.

Figur 2 (FIG 2) zeigt eine aus dem Stand der Technik bekannte Beizanlage 1 zum Beizen von Stahlbändern 6, die einen höheren Anteil an Silizium enthalten (mehr als zwei Gewichtsprozent). Zusätzlich zu der in FIG 1 dargestellten Ausführung werden in der Beizanlage 1 gemäß FIG 2 ein erster Teilstrom 5' an Beizflüssigkeit 2 in einem Inline- oder Offline-Betrieb und ein zweiter Teilstrom 5" an Beizflüssigkeit 2 in einem Offline-Betrieb aus der Druckleitung 4 abgezweigt und jeweils über eine Kühlvorrichtung 27 bzw. 27' einer Abscheidevorrichtung 28 bzw. 28' zur Abtrennung ungelöster Siliziumverbindungen zugeführt. Die von ungelösten Siliziumverbindungen gereinigte Beizflüssigkeit 2 des Teilstroms 5' wird über Ventile 29 entweder in einem Offline-Betrieb weiter in eine Regenerationsanlage 26 geleitet oder in einem Inline-Betrieb wieder in den Kreislauftank 20 zurückgeführt.

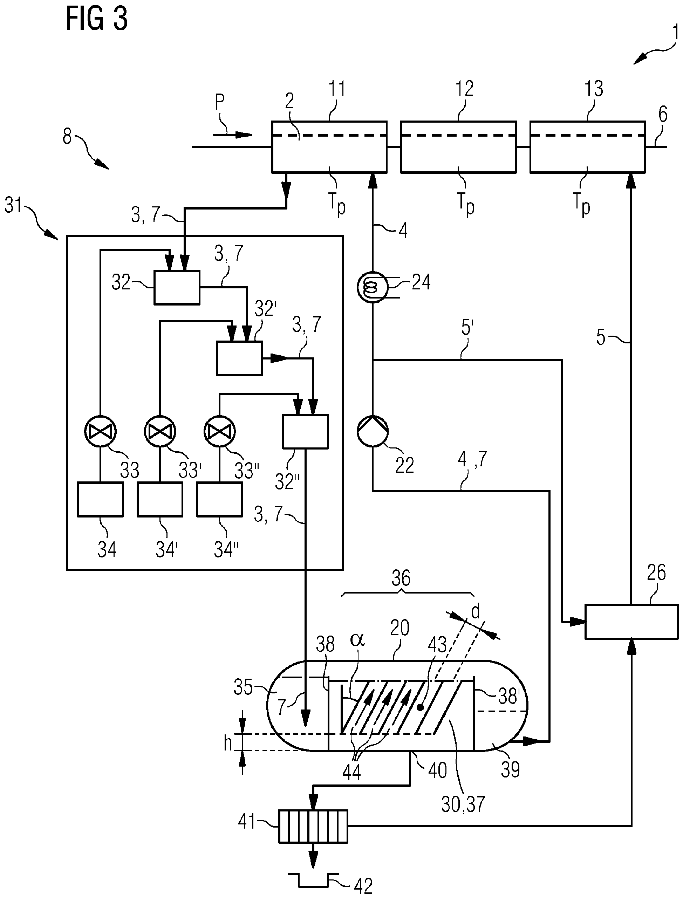

Figur 3 (FIG 3) zeigt beispielhaft und schematisch einen Beizkreislauf 8 eines Beiztanks 11 mit einer Flokkulationsvorrichtung 31 und einem Kreislauftank 20, der eine erfindungsgemäße Abscheidevorrichtung 30 zum Abscheiden von ungelösten Stoffen, bevorzugt von Siliziumverbindungen, aus der Beizflüssigkeit 2 umfasst. Beispielhaft dargestellt ist eine drei Beiztanks 11, 12 und 13 umfassende Beizanlage 1, die Erfindung ist jedoch auch auf Beizanlagen mit mehr oder weniger als drei Beiztanks anwendbar.

Gemäß FIG 3 ist die Abscheidevorrichtung 30 im Kreislauftank 20 des ersten Beiztanks 11 angeordnet, da die Beizflüssigkeit 2 in diesem die höchste Konzentration an beim Beizen gebildeten Zunderverbindungen aufweist und daher in diesem Beizkreislauf die größte Notwendigkeit von deren Abscheidung, insbesondere von ungelösten Siliziumverbindungen, besteht. Die Beizkreisläufe der weiteren Beiztanks 12 und 13 können aufgrund deren geringerer Konzentration an ungelösten Stoffen auch als herkömmlicher Beizkreislauf gemäß FIG 1 ausgestaltet sein (in FIG 3 nicht dargestellt). Es ist jedoch auch möglich, mehrere (beispielsweise die ersten zwei oder drei) oder auch alle Beizkreisläufe einer Beizanlage 1 mit einer Abscheidevorrichtung 30 gemäß FIG 3 auszugestalten.

In FIG 3 durchläuft ein Metallband 6 sukzessive drei jeweils mit einer Beizflüssigkeit 2 gefüllte Beiztanks 11, 12 und 13 in Produktionsrichtung P. Die Beiztanks 11, 12 und 13 weisen jeweils ein Volumen von etwa 30 bis 40 Kubikmeter und die verbindenden Rohrleitungen des Beizkreislaufs 8 weisen ein Gesamtvolumen von etwa 10 Kubikmeter auf. Aus dem ersten Beiztank 11 wird ein etwa 500 Kubikmeter pro Stunde umfassender Hauptvolumenstrom 7 an Beizflüssigkeit 2 aus dem Beiztank 11 über die Rücklaufleitung 3 ausgeleitet und tritt anschließend nacheinander durch drei Mischzonenbehälter 32, 32' und 32" einer in der Rücklaufleitung 3 angeordneten Flokkulationsvorrichtung 31 hindurch.

In den Mischzonenbehältern 32, 32' und 32" erfolgt jeweils die Aufbereitung entsprechender Flockungshilfsmittel mit Hilfe von entsprechenden Ansetzvorrichtungen 33, 33' und 33". Beispielsweise wird das jeweilige Flockungshilfsmittel in fester Form aus einem entsprechenden Vorratsbehälter 34, 34' bzw. 34" in die jeweilige Ansetzvorrichtung 33, 33' und 33" eingebracht und in einer Flüssigkeit (z.B. Wasser) aufgelöst, sodass es in der für den zugeordneten Mischzonenbehälter 32, 32' und 32" benötigten Konzentration bereitgestellt und in den Hauptvolumenstrom 7 eingebracht werden kann, um die Sedimentation der darin ungelösten Stoffe in einer nachfolgenden Sedimentationszone 36 zu fördern. Alternativ kann das jeweilige Flockungshilfsmittel in dem jeweiligen Vorratsbehälter 34, 34' bzw. 34" bereits in konzentrierter, flüssiger Form vorliegen und in der jeweiligen Ansetzvorrichtung 33, 33' und 33" auf eine gewünschte Konzentration verdünnt werden. Wiederum alternativ kann das jeweilige Flockungshilfsmittel auch in fester Form aus dem entsprechenden Vorratsbehälter 34, 34' bzw. 34" direkt mittels der jeweiligen Ansetzvorrichtung 33, 33' bzw. 33" in den jeweiligen Mischzonenbehälter 32, 32' und 32" eingebracht werden, wobei die Ansetzvorrichtung 33, 33' bzw. 33" in diesem Fall als Dosiervorrichtung ausgestaltet ist. Wird von einem der Mischzonenbehälter 32, 32' bzw. 32" kein Flockungshilfsmittel in den Hauptvolumenstrom 7 zugesetzt, dann wird der entsprechende Mischzonenbehälter 32, 32' bzw. 32" vom Hauptvolumenstrom 7 nur passiv durchströmt.

Der Transport der Beizflüssigkeit 2 zwischen den einzelnen Mischzonenbehältern 32, 32' und 32" kann dabei entweder aufgrund eines natürlichen Gefälles oder mit Hilfe von Pumpen (in FIG 3 nicht dargestellt) erfolgen. Somit können im Ausführungsbeispiel nach FIG 3 bis zu drei unterschiedliche Flockungshilfsmittel in einer jeweils benötigten Konzentration in den Hauptvolumenstrom 7 des Beizkreislaufs 8 eingebracht werden. Die Flockungshilfsmittel befördern das Koagulieren ungelöster Stoffe der Beizflüssigkeit 2 zu größeren Partikeln 43, die mit Hilfe einer nachfolgenden Abscheidevorrichtung 30 aufgrund ihrer Größe leichter abgeschieden werden können.

Nach den Mischzonenbehältern 32, 32' und 32" wird der Hauptvolumenstrom 7 des Beizkreislaufs 8 von der Rücklaufleitung 3 in den Kreislauftank 20 geleitet, der erfindungsgemäß eine Beruhigungszone 35, eine Sedimentationszone 36 und eine Vorlagezone 39 umfasst und ein Gesamtvolumen von 75 bis 100 Kubikmetern aufweist. Die Beruhigungszone 35 dient der Beruhigung des Hauptvolumenstroms 7 und der Minimierung von Verwirbelungen. Über einen ersten Überlauf 38 strömt die beruhigte Beizflüssigkeit 2 in die Sedimentationszone 36, in der eine als Schrägklärvorrichtung 37 ausgebildete Abscheidevorrichtung 30 angeordnet ist.

Die Schrägklärvorrichtung 37 weist eine Mehrzahl von parallel verlaufenden Strömungskanälen 44 auf, die in einem Normalabstand d von zumindest 50 bis 70mm zueinander benachbart angeordnet und in einem Winkel α gegen die Vertikale geneigt sind. In den Strömungskanälen setzen sich zu Partikeln 43 koagulierte ungelöste Stoffe der Beizflüssigkeit 2 aufgrund der Schwerkraftwirkung in einem Sedimentationsprozess in Richtung des Bodenbereiches der Sedimentationszone 36 ab. Das untere Ende der Strömungskanäle 44 ist in vertikaler Richtung in einer Höhe h von zumindest 200mm zum Bodenniveau des Kreislauftanks 20 beabstandet. Die eine Strömungsrichtung (in FIG 3 durch schräg nach oben weisende Pfeile symbolisiert) für die durchgeleitete Beizflüssigkeit 2 ausbildenden Strömungskanäle 44 können aus parallel zueinander angeordneten Rohren oder Hohlprismen gebildet werden, die jeweils in einer Ebene normal zur Strömungsrichtung eine geschlossene Begrenzung aufweisen, sodass die Schrägklärvorrichtung 37 insgesamt eine wabenartige Struktur aufweist (in FIG 3 nicht sichtbar).

Der Beizschlamm, der sich beim Durchströmen der Beizflüssigkeit 2 durch die Schrägklärvorrichtung 37 im Bodenbereich der Sedimentationszone 36 bzw. des Kreislauftanks 20 ansammelt, wird von dort abgezogen und über eine Abzugsöffnung 40 einer Filtriervorrichtung 41 zugeführt. Der Boden des Kreislauftanks 20 ist vorzugsweise so ausgeführt, dass ein selbsttätiger Transport des Sediments zur Abzugsöffnung 40 gewährleistet ist (z.B. durch eine entsprechende Abschrägung oder Rundung in der Bodenfläche; beispielsweise kann der Kreislauftank 20 als liegender Zylinder mit abgerundeten Böden und einem Durchmesser von beispielsweise 4 bis 4.5 Metern ausgestaltet sein). Alternativ kann das Sediment auch mit geeigneten Fördereinrichtungen (z.B. einer Pumpe, in FIG 3 nicht dargestellt) aus dem Kreislauftank 20 abgezogen werden. In der Filtriervorrichtung 41, die beispielsweise als Kammerfilterpresse ausgeführt ist, werden die festen Bestandteile des Beizschlammes als Trockensubstanz (Filterkuchen) abgetrennt und einem Sammelbehälter 42 zwecks anschließender Entsorgung zugeführt, während der verbleibende flüssige Anteil des Beizschlamms (Filtrat) der Regenerationsanlage 26 zugeführt wird.

Über einen zweiten Überlauf 38' strömt die von den ungelösten Stoffen gereinigte Beizflüssigkeit 2 in die Vorlagezone 39 des Kreislauftanks 20, von wo aus der Hauptvolumenstrom 7 mit Hilfe einer Umwälzpumpe 22 über eine Druckleitung 4 wieder in den ersten Beiztank 11 zurückgeführt wird. In der Druckleitung 4 ist eine Heizvorrichtung 24 angeordnet, die die durchgeleitete Beizflüssigkeit 2 auf eine Prozesstemperatur Tₚ von in der Regel bis zu 90°C erwärmt. Vor der Heizvorrichtung 24 wird ein Teilstrom 5' aus dem Hauptvolumenstrom 7 - beispielsweise 12 bis 18 Kubikmeter pro Stunde - abgezweigt und einer Regenerationsanlage 26 zugeführt.

### Bezugszeichenliste

- 1: Beizanlage
- 2: Beizflüssigkeit
- 3: Rücklaufleitung
- 4: Druckleitung
- 5, 5', 5": Teilstrom
- 6: Metallband
- 7: Hauptvolumenstrom
- 8: Beizkreislauf
- 11, 12, 13: Beiztank
- 20: Kreislauftank
- 22: Umwälzpumpe
- 24: Heizvorrichtung
- 26: Regenerationsanlage
- 27, 27': Kühlvorrichtung
- 28, 28': Abscheidevorrichtung
- 29: Ventil
- 30: Abscheidevorrichtung
- 31: Flokkulationsvorrichtung
- 32, 32', 32": Mischzonenbehälter
- 33, 33', 33": Ansetzvorrichtung
- 34, 34', 34": Vorratsbehälter
- 35: Beruhigungszone
- 36: Sedimentationszone
- 37: Schrägklärvorrichtung
- 38, 38': Überlauf
- 39: Vorlagezone
- 40: Abzugsöffnung
- 41: Filtriervorrichtung
- 42: Sammelbehälter
- 43: Partikel
- 44: Strömungskanal
- d: Normalabstand
- h: Höhe
- P: Produktionsrichtung
- Tₚ: Prozesstemperatur
- α: Winkel

## Patentansprüche

1. Vorrichtung zum Abscheiden ungelöster Stoffe, insbesondere von Siliziumverbindungen, aus einer Beizflüssigkeit (2) an einer Beizanlage (1) mit zumindest einem Beizkreislauf (8), der Beizkreislauf (8) umfassend
- einen Beiztank (11, 12, 13) der Beizanlage (1) zum Beizen von Metallbändern (6),
- eine Rücklaufleitung (3) zwischen dem Beiztank (11, 12, 13) und einem Kreislauftank (20),
- eine Druckleitung (4) zwischen dem Kreislauftank (20) und dem Beiztank (11, 12, 13),
- eine Umwälzpumpe (22) zum Umwälzen eines Hauptvolumenstroms (7) an Beizflüssigkeit (2), und
- eine in der Druckleitung (4) angeordnete Heizvorrichtung (24) zum Erwärmen des Hauptvolumenstroms (7) auf eine Prozesstemperatur (Tₚ)
wobei die Vorrichtung
- eine Flokkulationsvorrichtung (31) mit einem oder mehreren Mischzonenbehältern (32, 32', 32") zum Einbringen zumindest eines Flockungshilfsmittels in den Hauptvolumenstrom (7),
- und eine in dem Kreislauftank (20) angeordnete Abscheidevorrichtung (30) zum Abscheiden ungelöster Stoffe direkt aus dem Hauptvolumenstrom (7),
aufweist.

2. Vorrichtung (1) nach Anspruch 1, wobei der Kreislauftank (20) ein 2- bis 3-faches Volumen des Beiztanks (11, 12, 13) in dem Beizkreislauf (8) aufweist, und wobei die Abscheidevorrichtung (30) mindestens eine Beruhigungszone (35), eine Sedimentationszone (36) und eine Vorlagezone (39) umfasst und wobei zwischen der Beruhigungszone (35) und der Sedimentationszone (36) ein erster Überlauf (38) und zwischen der Sedimentationszone (36) und der Vorlagezone (39) ein zweiter Überlauf (38') angeordnet ist.

3. Vorrichtung (1) nach Anspruch 1 oder 2, wobei die Flokkulationsvorrichtung (31) zumindest zwei Mischzonenbehälter (32, 32', 32") für die Zugabe von zumindest zwei unterschiedlichen Flockungshilfsmitteln in den Hauptvolumenstrom (7) aufweist.

4. Vorrichtung (1) nach einem der vorangegangenen Ansprüche, wobei die Summe der Volumina aller Mischzonenbehälter (32, 32', 32") derart bemessen ist, dass die Verweilzeit der durch die Mischzonenbehälter (32, 32', 32") durchgeleiteten Beizflüssigkeit (2) 1 bis 3 Minuten beträgt.

5. Vorrichtung (1) nach einem der vorhergehenden Ansprüche, wobei die Abscheidevorrichtung (30) als Schrägklärvorrichtung (37), umfassend eine Mehrzahl von zueinander parallelen Strömungskanälen (44) ausgestaltet ist.

6. Vorrichtung (1) nach Anspruch 5, wobei die Strömungskanäle (44) in einem Winkel (α) gegen die Vertikale geneigten sind und aus einem säurebeständigen und hitzefesten Material bestehen, das dauerhaft Temperaturen von zumindest 90°C widersteht.

7. Vorrichtung (1) nach Anspruch 6, wobei der Winkel (α) 15-60° beträgt.

8. Vorrichtung (1) nach einem der Ansprüche 6 oder 7, wobei ein Normalabstand (d) zwischen benachbarten Strömungskanälen (44) mindestens 50mm beträgt.

9. Verfahren zum Abscheiden ungelöster Stoffe, insbesondere von Siliziumverbindungen, aus einer Beizflüssigkeit (2) in zumindest einem Beizkreislauf (8) einer Beizanlage (1), der Beizkreislauf (8) umfassend
- einen Beiztank (11, 12, 13) der Beizanlage (1) zum Beizen von Metallbändern (6),
- eine Rücklaufleitung (3) zwischen dem Beiztank (11, 12, 13) und einem Kreislauftank (20),
- eine Druckleitung (4) zwischen dem Kreislauftank (20) und dem Beiztank (11, 12, 13),
- eine Umwälzpumpe (22), und
- eine in der Druckleitung (4) angeordnete Heizvorrichtung (24),
wobei
- mittels der Umwälzpumpe (22) ein Hauptvolumenstrom (7) an Beizflüssigkeit (2) aus dem Beiztank (11, 12, 13) durch die Rücklaufleitung (3) in den Kreislauftank (20) und über die Druckleitung (4) zurück in den Beiztank (11, 12, 13) umgewälzt wird,
- mittels einer Flokkulationsvorrichtung (31) mit einem oder mehreren Mischzonenbehältern (32, 32', 32") zumindest ein Flockungshilfsmittel in den Hauptvolumenstrom (7) eingebracht wird,
- mittels einer in dem Kreislauftank (20) angeordneten Abscheidevorrichtung (30) ungelöste Stoffe direkt aus dem Hauptvolumenstrom (7) abgeschieden werden, und
- mittels der Heizvorrichtung (24) der Hauptvolumenstrom (7) auf eine Prozesstemperatur (Tₚ) erwärmt wird.

10. Verfahren nach Anspruch 9, wobei
- beim Beizen einer ersten Sorte von Metallbändern (6) mittels eines ersten Mischzonenbehälters (32) ein erstes Flockungshilfsmittel in den Hauptvolumenstrom (7) eingebracht und
- beim Beizen einer zweiten Sorte von Metallbändern (6) ausschließlich mittels eines zweiten und/oder eines dritten Mischzonenbehälters (32', 32") zumindest ein zweites Flockungshilfsmittel in den Hauptvolumenstrom (7) eingebracht wird.
